# EUROPEAN PATENT APPLICATION

(11) **EP 4 641 969 A1**
(43) Date of publication of application: **29.10.2025**
(21) Application number: 24382439.8
(22) Date of filing: 23.04.2024
(51) Int. Cl.: H04L 9/06, H04L 9/32, H04L 9/00

(54) **SYSTEM AND METHOD FOR CERTIFYING DIGITAL INFORMATION**

(71) Applicant: Ilimit Comunicacions,S.L., 08224 Terrassa Barcelona (ES)
(72) Inventor: Martínez Pérez, Agustín, 08635 Sant Esteve Sesrovires (Barcelona) (ES); Moro Rialp, Alexandre, 08222 Terrassa (Barcelona) (ES); Tobella Vergés, Xavier, 08221 Terrassa (Barcelona) (ES); Herrera Joancomartí, Jordi, 08172 Sant Cugat del Vallès (Barcelona) (ES)
(74) Representative: Clarke, Modet y Cía., S.L.

(57) **Abstract**

Digital information certification system and method. The method (100) comprises receiving (110) a hash value (5) of first input digital data (4); selecting (120) a subset (7) and an order (122) of timestamp servers (8) from a set (6) of available timestamp servers (8), where at least one of the subset (7) and the order (122) is selected randomly; obtaining (130) a distributed timestamp (16) of the hash value (5) by chaining the timestamps (10) from the subset (7) of timestamp servers (8) according to the selected order; and obtaining (140), from the distributed timestamp (16) of the hash value (5), a certificate (9) of the first input digital data (4). The invention allows for reliable certification of digital information, increasing the difficulty of falsifying the timestamp included in the certification.

## Description

### Field of the invention

This invention falls within the field of digital data certification.

### Background of the Invention

There are different technological certification mechanisms aimed at demonstrating the existence of digital data on a specific date. These are based on associating a time value with the data, either directly through cryptographic actions (such as timestamped signatures and data summaries) or through registration on a blockchain with a time reference. The former represents centralized solutions, allowing the provider to indicate an incorrect value compared to the actual one. The latter can be decentralized solutions, depending on the implementation, and present a greater challenge for indicating an incorrect time value.

To resolve judicial doubts regarding the possibility of falsification, there are so-called qualified time providers (the European Union has created the figure of the qualified time stamp authority, QTSA) that provide a legally recognized trusted time stamping service. From a legal standpoint, the timestamps generated by qualified time providers must be considered accurate, although technically they can still be falsified just as easily as they are centralized, since this does not make it more difficult to falsify compared to non-qualified time providers.

The present invention solves the problem of insecurity in digital data certification, allowing for reliable certification of digital information and increasing the difficulty of falsifying the timestamp included in the certification.

### References

[1] "Secure Hash Standard (SHS)". Information Technology Laboratory. National Institute of Standards and Technology, 2015.
[2] C. Adams et al., "Time-Stamp Protocol (TSP)". Internet Engineering Task Force (IETF), Agosto 2001.
[3] EU/EEA Trusted List Browser. European Comission. url: https://eidas.ec.europa.eu/ efda/tl-browser/#/screen/home.

### Description of the invention

The invention relates to a system and method for certifying digital information that increases the security of the certification, making it more difficult to falsify the included timestamp.

The system comprises a certification device configured to receive a hash value of first input digital data; select a subset and an order of timestamp servers from a set of available timestamp servers, where at least one of the subset and the order is selected randomly; obtain a distributed timestamp of the hash value by chaining timestamps from the subset of timestamp servers according to the selected order; and obtain, from the distributed timestamp of the hash value, a certificate of the first input digital data. The system may also include a database in which the information generated during the certification process is stored, including, for example, the timestamps obtained from the subset of timestamp servers.

The method for certifying digital information comprises the following steps: receiving a hash value of first input digital data; selecting a subset and an order of timestamp servers from a set of available timestamp servers, where at least one of the subset and the order is selected randomly; obtaining a distributed timestamp of the hash value by chaining timestamps from the subset of timestamp servers according to the selected order; and obtaining, from the distributed timestamp of the hash value, a certificate of the first input digital data.

It is also an object of the present invention a program product comprising program instruction means for carrying out the digital information certification method when the program is executed on a processor. The present invention also includes a program storage medium (e.g., a USB memory, a CD-ROM, a DVD, a Blu-ray disc, a hard disk, etc.) that stores said program product.

Given that the selection of the timestamp servers and the order of execution of the certification requests are carried out randomly, the present invention significantly increases the difficulty of subsequently falsifying the timestamp. This is because it would require falsifying the individual timestamps of all the involved servers in the same execution sequence, without being able to anticipate the servers used or the time stamping protocols applied.

The certification system also allows for the certification of large volumes of digital data. This platform operates by integrating a set of cryptographic operations and timestamps that certify the existence of the digital information at the moment of data processing by the system. Consequently, it ensures that any modification of the certified information can be detected due to the cryptographic properties of the operations used, which demonstrate the relationship between the data and the timestamp applied to it.

Additionally, the system allows for the provision of legal trust in the generated certificate when a qualified timestamp authority (QTSA) is used.

### Brief description of the drawings

The following is a very brief description of a series of drawings that help to better understand the invention and are expressly related to an embodiment of said invention, presented as a non-limiting example thereof.
Figures 1A-1E show different embodiments of the digital information certification system of the present invention.
Figure 2 shows an example of the chaining of timestamps to obtain the distributed timestamp.
Figure 3 illustrates a flowchart of a method for certifying digital information according to an embodiment of the present invention.
Figures 4A-4C show different embodiments for obtaining the certificate of the first input digital data from the distributed timestamp.
Figure 5 shows a process of random selection of the subset and the order of timestamp servers.
Figure 6 shows the generation of a Merkle tree from the timestamps of the subset of timestamp servers.
Figures 7A and 7B show an example of the process used for the mass certification of data using two Merkle trees, a qualified timestamp authority, and a blockchain. Figure 7C illustrates the contents of the certificate of the first digital data according to an embodiment.

### Detailed description of the invention

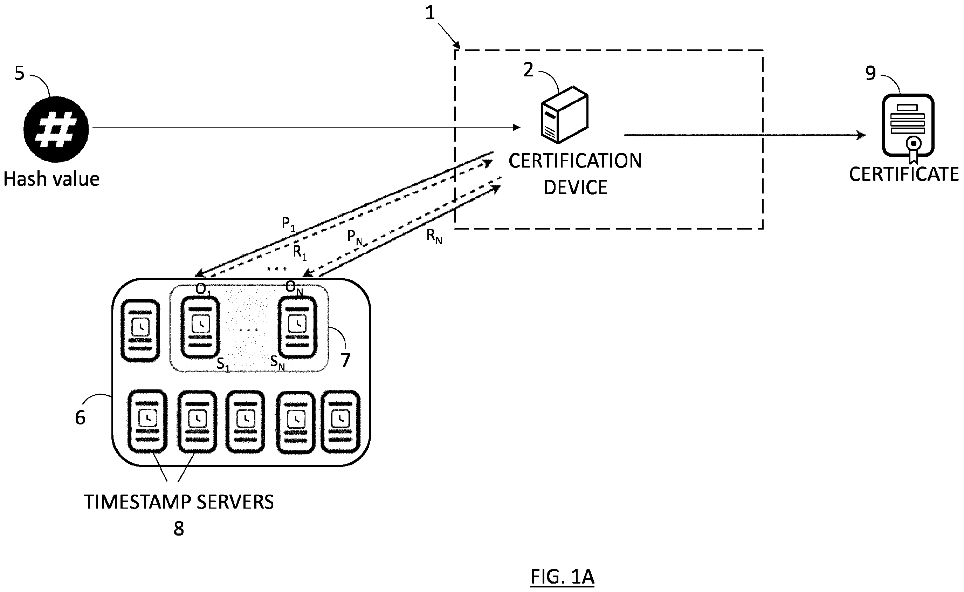

**Figures 1A-1E** schematically present different embodiments of the digital information certification system 1 of the present invention.

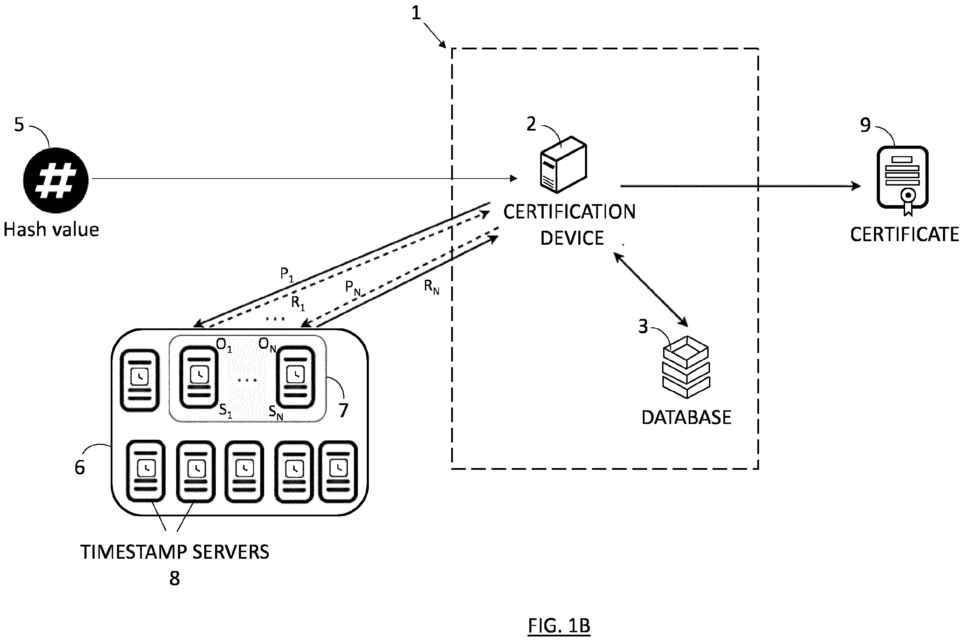

According to the embodiment of **Figure 1A****,** the certification system 1 of this embodiment comprises a certification device 2 and, optionally, a database 3, as shown in the embodiment of **Figure 1B****.** The certification device 2 is configured to receive a hash value 5 of first input digital data to be certified.

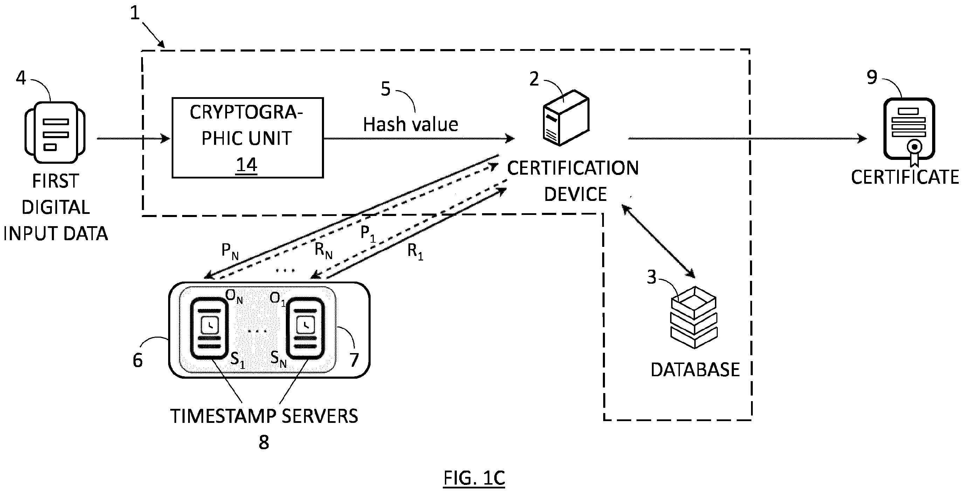

The certification system 1 may also comprise, as shown in **Figure 1C****,** a cryptographic unit 14 configured to receive the first input digital data 4 to be certified and apply a hash function (e.g., the SHA-256 cryptographic function [1]) to the first input digital data 4 to obtain the hash value 5 and send it to the certification device 2. Alternatively, as illustrated in Figures 1A and 1B, the certification system 1 can receive the hash value 5 of the first input digital data 4 to be certified directly from a user (for example, from an application installed on a user device, such as a computer or a smartphone, or from a web application) through any wired or wireless communication medium or protocol (e.g., through the Internet), in which case the presence of the cryptographic unit 14 would not be necessary in the system. If the certification system 1 includes a cryptographic unit 14, it can be integrated into the certification device 2 itself or be a separate hardware element independent from the certification device 2, as depicted in the example of Figure 1C. Therefore, the certification system 1 receives a certification request, which includes either the first input digital data 4 to be certified (e.g., Figure 1C) or the hash value 5 of the same (e.g., Figure 1A).

The certification device 2 is additionally configured to select a subset 7 of timestamp servers 8 and an order of timestamp servers 8 from a set 6 of available timestamp servers 8, where at least one of the subset 7 and the order of timestamp servers 8 is selected randomly. In the example shown in Figure 1A, the subset 7 is formed by N timestamp servers 8 (S₁, S₂, ..., S_{N}) from a set 6 of timestamp servers 8, and the order selected in the subset 7 is {O₁, O₂, ..., O_{N}}, with O₁ being the first timestamp server 8 in the subset 7 (in this example corresponding to S₁) and O_{N} being the last server in the subset 7 (in this example corresponding to S_{N}).

The number N of timestamp servers in the subset 7 and the number P of timestamp servers 8 in the set 6 can be any, fulfilling the condition that N≤P. In one embodiment, the subset 7 and the set 6 of timestamp servers 8 can coincide, as illustrated in Figure 1C. In this case, only the order of the timestamp servers 8 would be selected randomly. In the example of Figure 1C, the order of the timestamp servers 8 is shown to be the reverse of that in Figure 1A, where the first selected server O₁ is server S_{N} and the last selected server O_{N} is server S₁. In practice, the servers (S₁, S₂, ..., S_{N}) in the subset 7 will have a random order.

Each of the timestamp servers 8 in the set 6 preferably corresponds to a time stamping authority (TSA). The TSA acts as a provider of electronic certification and trust services, receiving a time stamping request for a hash and providing a signature on the received hash as well as a timestamp indicating when the time stamping authority received the request and performed the time stamping.

The certification device 2 is also configured to obtain a distributed timestamp of the hash value 5 by chaining the timestamps performed by the subset 7 of timestamp servers 8 according to the selected order {O₁, O₂, ..., O_{N}}. Each of the timestamps in the distributed timestamp is not a distributed timestamp by itself; rather, it is the collection of individual timestamps, issued by the different timestamp servers 8 involved in the process, that makes the timestamp distributed.

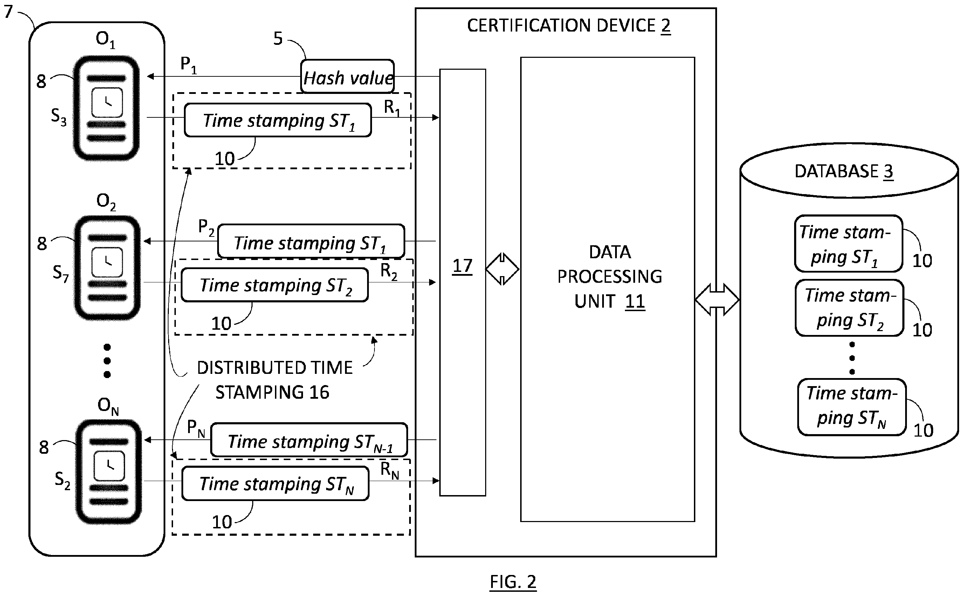

The operation of chaining timestamps involves linking a series of time stamping requests {P₁, P₂, ..., P_{N}} and time stamping responses {R₁, R₂, ..., R_{N}} from these servers. **Figure 2** shows an example of the chaining of timestamps in more detail. For this, the certification device 2 sends a first time stamping request P₁ to the first timestamp server 8 in the subset 7 according to the randomly established order. In the example of Figure 1C, the first time stamping request P₁ is sent to the first randomly selected server O₁, which in this case corresponds to server S_{N}. In the example of Figure 2, the first server O₁ corresponds to server S₃ in the subset 7 of timestamp servers 8.

The chaining operation of request-response involves using the timestamp data (timestamp STᵢ) obtained from a server Oᵢ as the input (data to be timestamped) for the next server Oᵢ₊₁, with the particularity that the input for the first server (i=1) is the hash value 5 received by the certification device 2.

Thus, the first time stamping request P₁ includes the hash value 5, which is the digital information to be timestamped. The first time stamping response R₁ includes the timestamp 10 (ST₁) performed by the first server O₁, which typically includes a timestamp and a digital signature (using the private key of the timestamp authority corresponding to that server) of the hash calculated from the concatenation of the data to be timestamped sent in the request (hash value 5 in the case of the first request P₁) and the timestamp. The second time stamping request P₂ includes the first timestamp 10 (ST₁) obtained from the first server O₁, and the second time stamping response R₂ includes the timestamp 10 (ST₂) performed by the second server O₂. Finally, the last time stamping request P_{N} includes the penultimate timestamp 10 (ST_{N-1}) obtained from the penultimate server O_{N-1}, and the last time stamping response R_{N} includes the timestamp 10 (ST_{N}) performed by the last server O_{N}.

Finally, the certification device 2 obtains a certificate 9 of the first input digital data 4 from the distributed timestamp of the hash value 5. In Figure 2, the distributed timestamp 16 is represented as the set of chained timestamps 10 {ST₁,..., ST_{N}}. However, the distributed timestamp 16 of the hash value 5 can be identified in different ways; for example, by the last timestamp in the chain of timestamps that has been chained (timestamp ST_{N}) or by calculating a hash of the set of involved timestamps 10 (timestamp ST₁, ..., timestamp ST_{N}), with the first option being the most efficient.

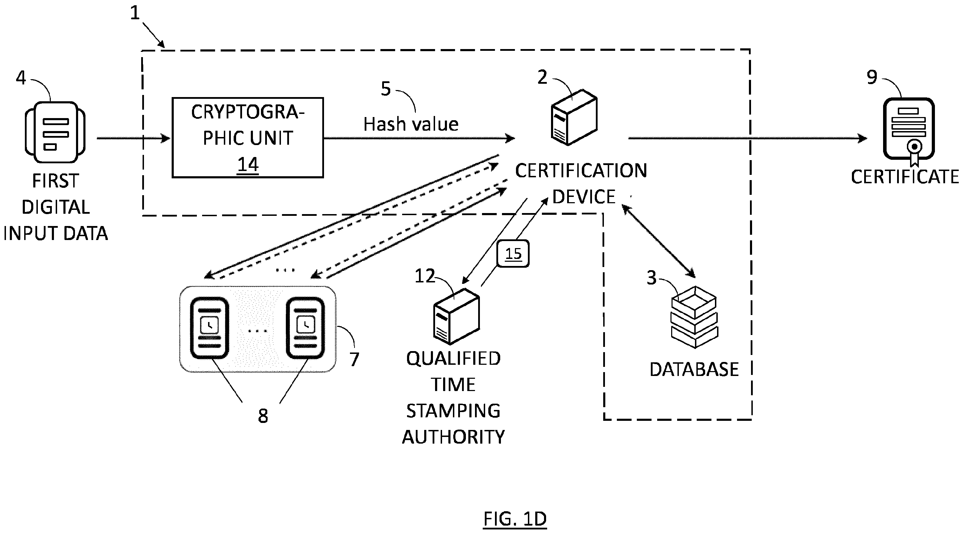

The certificate 9 may also include a qualified timestamp 15 (i.e., a legally recognized trusted timestamp in the corresponding territory) requested from a qualified time provider (e.g., a qualified time stamping authority 12, QTSA) based on digital information obtained from the distributed timestamp 16, as illustrated in the embodiment of **Figure 1D****.** The qualified timestamp is the most secure and reliable type, as it is obtained through the signature of the qualified time provider, recognized by public institutions that grant it the status of a qualified trust service provider, thereby ensuring the authenticity and integrity of the timestamp with the backing of the applicable legal regulations.

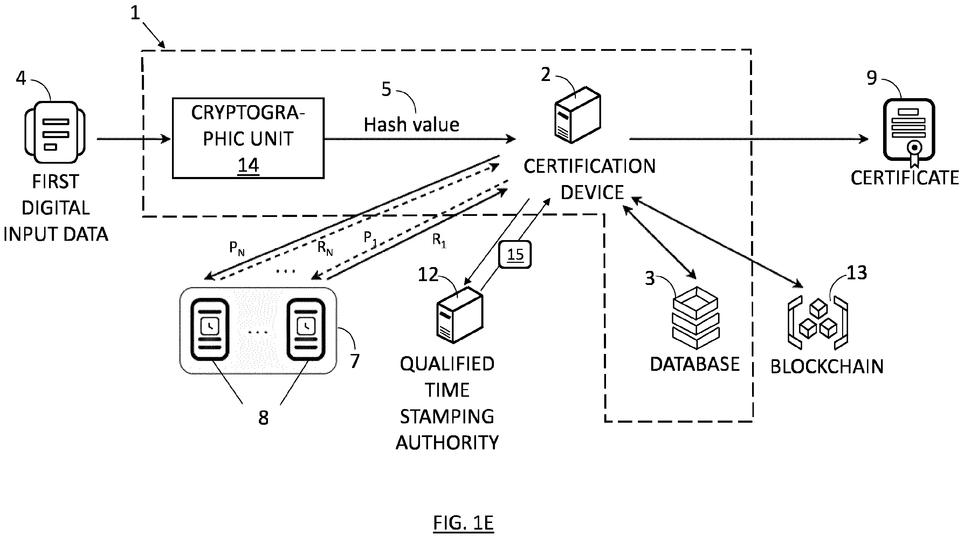

In another embodiment, shown in **Figure 1E****,** to obtain the certificate 9, the certification device 2 stores the information related to the timestamps (including information obtained from the distributed timestamp 16 and/or the qualified timestamp 15) in a blockchain 13. The certificate 9 includes information related to the storage of the data in the blockchain 13.

In one embodiment, the certification system 1 additionally includes a database 3, in which the information contained in the certificate 9 of the first input digital data 4 is stored. For example, in the embodiment of Figure 1B, the timestamps 10 (ST₁, ST₂, ..., ST_{N}), obtained from the subset 7 of timestamp servers 8 according to the randomly determined order {O₁, O₂, ..., O_{N}}, can be stored for later retrieval. The hash value 5 associated with these timestamps 10 can also be stored in the database 3.

The certification device 2 may comprise, as shown in the embodiment of Figure 2, a data processing unit 11 (e.g., a processor or a set of processors) configured to perform the actions of the certification device 2. The certification device 2 may also include, as shown in Figure 2, a communication module 17 responsible for receiving the hash value 5 and communicating with elements external to the certification system 1 (timestamp servers 8, qualified time stamping authority 12, blockchain 13).

The certification device 2 may include the cryptographic unit 14 (especially recommended when the certification device 2 directly receives the first input digital data 4 instead of the hash value 5), either as a module independent of the data processing unit 11 or as a module that is part of the data processing unit 11 itself. In this case, the cryptographic unit 14 would receive the first input digital data 4 from the communication module 17, calculate the hash value 5 from this data, and send it to the data processing unit 11.

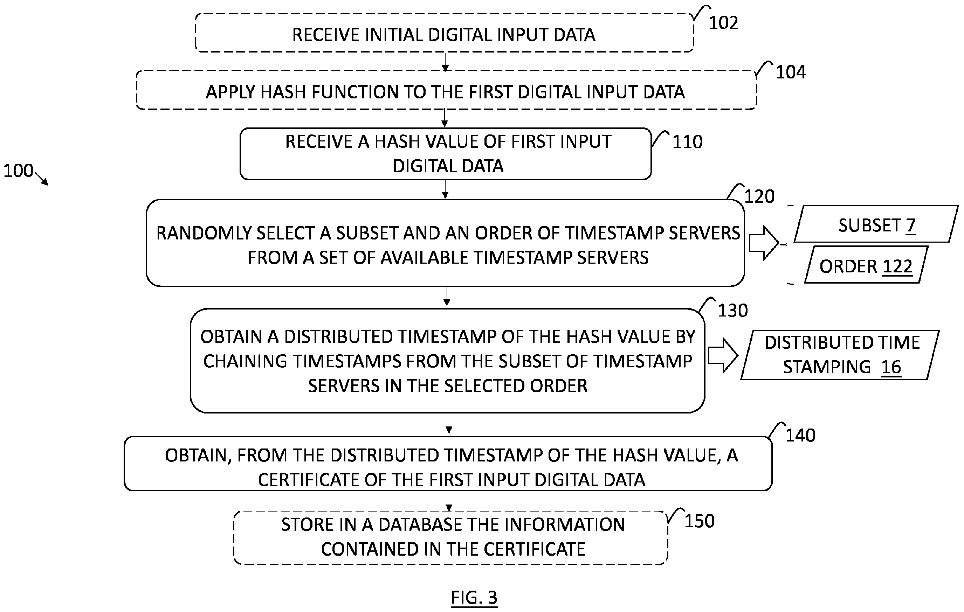

**Figure 3** illustrates the flowchart of a digital information certification method 100 according to an embodiment of the present invention. The certification method 100 comprises the following steps:
- Receiving 110 a hash value 5 of first input digital data 4.
- Selecting 120 a subset 7 and an order 122 of timestamp servers 8 from a set 6 of available timestamp servers 8, where the subset 7 and/or the order 122 of timestamp servers 8 are selected randomly.
- Obtaining 130 a distributed timestamp 16 of the hash value 5 by chaining the timestamps 10 from the subset 7 of timestamp servers 8 according to the selected order 122.
- Obtaining 140, from the distributed timestamp 16 of the hash value 5, a certificate 9 of the first input digital data 4.

The certification method 100 may additionally, optionally (represented by dashed lines), include receiving 102 the first input digital data 4, applying 104 a hash function to the first input digital data 4 to obtain the hash value 5. The certification method 100 may optionally include storing 150 in a database 3 the information contained in the certificate 9 of the first input digital data 4, including at least the timestamps 10 obtained from the subset 7 of timestamp servers 8.

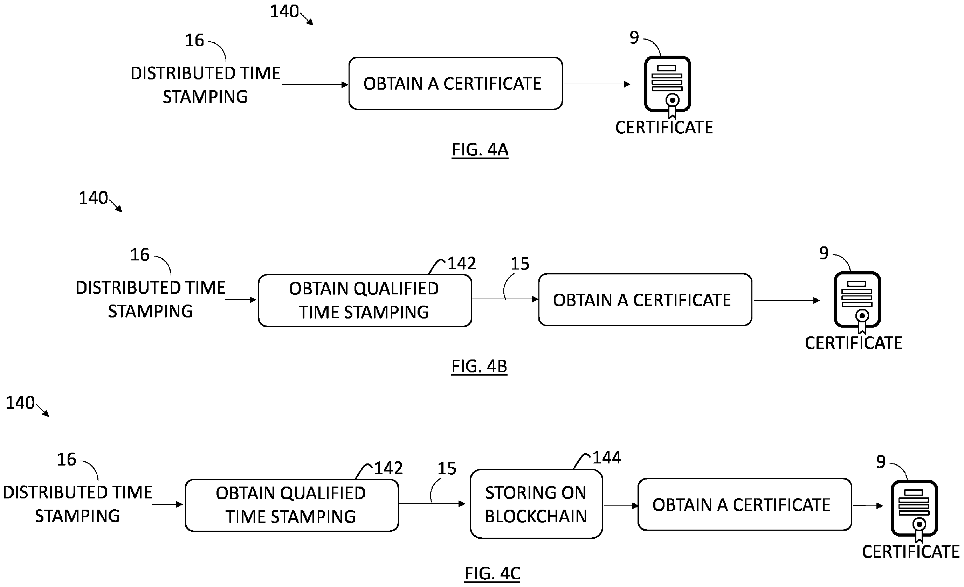

**Figures 4A, 4B,** and **4C** show different embodiments for obtaining 140 the certificate 9 of the first input digital data 4 from the distributed timestamp 16. In Figure 4A, the certificate is obtained directly from the distributed timestamp 16 (e.g., using a hash function). In Figure 4B, the step of obtaining 140 the certificate 9 includes obtaining 142 a qualified timestamp 15 of information related to the distributed timestamp 16 using a qualified time stamping authority 12. In Figure 4C, the step of obtaining 140 the certificate 9 includes storing 144 information related to the previously obtained timestamps (e.g., the qualified timestamp 15 and/or the distributed timestamp 16) in a blockchain 13.

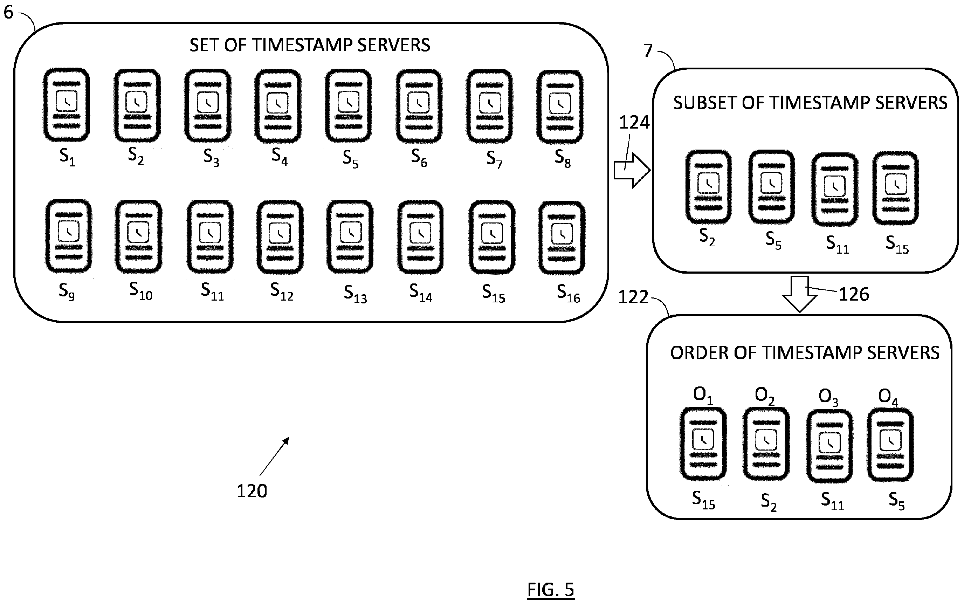

**Figure 5** illustrates an example of the process for the random selection of the subset 7 and the order 122 of timestamp servers 8 from a set 6 of timestamp servers 8 that the certification system 1 has available for performing timestamps 10 (in the case where both the subset 7 and the order 122 are random). In this example, the set 6 has sixteen timestamp servers 8 (S₁, S₂, ..., S₁₆), and a subset 7 of timestamp servers 8 is randomly selected 124. The number N of timestamp servers 8 that make up the subset 7 can be predetermined or itself a randomly selected number.

In the example shown in Figure 5, four timestamp servers 8 are selected, specifically servers S₂, S₅, S₁₁ y S₁₅, which make up the subset 7 of timestamp servers 8. Subsequently, or simultaneously with the selection of the components of subset 7, the order 122 of these timestamp servers 8 is randomly selected 126. The first selected server O₁ is server S₁₅, the second selected server O₂ is server S₂, the third selected server O₃ is server S₁₁, and the fourth selected server O₄ is server S₅. This order 122 will be used in the chaining of timestamps 10 with the timestamp servers 8 of the subset 7, as described in the example of Figure 2.

The following provides a more detailed explanation of different examples of embodiments of the system and method of the present invention, including optional steps and features.

Regarding the acquisition of the information to be stamped, the first step to successfully complete the digital information certification process is calculating the summary, fingerprint, or hash (hereinafter referred to as hash value 5) of the data to be stamped, using a cryptographic function (e.g., SHA-256). This hash value 5 is what the certification system 1 receives to initiate the certification process. To obtain the information to be stamped, the system may, for example, have a REST API that receives an HTTP certification request to activate the information certification process, although any other mechanism to receive certification requests (e.g., WebSockets) can also be used.

Regarding the acquisition of the distributed timestamp 16, once the hash value 5 (an unequivocal representation of the digital data to be certified) is obtained, the process to acquire a timestamp for this hash begins. This timestamp provides proof of the existence of the data at a specific moment in time. Creating a timestamp for digital data is as trivial as falsifying it, that is, indicating a different date from the real one. To eliminate this risk and achieve a reliable timestamp, a distributed time stamping process is executed.

The distributed time stamping process consists of two elements: public timestamp servers and a request-response chaining operation to these servers. The first element, the timestamp servers 8, are external actors to the system that provide a time value linked to the data sent to them following some time stamping protocol, such as TSP [2]. These types of protocols rely on creating digital signatures over the combination of, primarily, the data and the timestamp indicating the moment the stamping is performed.

The second element of the process for obtaining the distributed timestamp 16, the request-response chaining operation, involves using the timestamp data obtained from one timestamp server 8 as the input (data to be timestamped) for the next server. This operation provides two benefits to the resulting final timestamp:
- Increased trust in the resulting timestamp, given that the selection of servers and the order of execution of requests are done randomly. This significantly increases the difficulty of subsequently falsifying the timestamp because it would require falsifying the individual timestamps of all involved servers in the same execution sequence. The alternative option of taking multiple unchained timestamps would result in easier falsification by allowing the discarding of timestamps from servers that were not successfully falsified.
- Allows the detection and discarding of inaccurate timestamps, since if all servers have the correct date, the time indicated by a second server should always be greater than the first and less than a third (t1 < t2 < t3).

In the example shown in Figures 1A-1E, the distributed time stamping is performed using all servers under a common time stamping protocol (it could be executed by chaining servers using different protocols). In one embodiment, the process may comprise the following steps:
1. Determination of the data to be stamped and the servers to be used:
   - Capturing the data to be stamped.
   - Random selection of a set of timestamp servers to execute the requests.
2. First time stamping request:
   - Construction of the request message by the first server: adapting the format of the data to be stamped (in this case the fingerprint) to the format required by the corresponding protocol, applying the hash function to the data to obtain a hash value with the length required by the server's protocol. This hash value is included in the timestamp request message, which will be sent to the server as established by the protocol being executed. This ensures that the data is included in the message that will be stamped by the server.
   - Sending and receiving the first time stamping request (first server in the chain).
   - Validation of the received timestamp according to the protocol specifications (data to be signed and the signature of the timestamp server).
3. Chaining of request-response-request:
   - Construction of the request message by the next server: the data from the previous timestamp is used as the data to be stamped in the next instance. These are also adapted to the format required by the protocol of the new server.
   - Sending and receiving the time stamping request from the next server in the chain.
   - Validation of the received timestamp according to the protocol specifications.
   - Checking the coherence of the stamped time with respect to the previously obtained times. If any inconsistency is detected, the distributed time stamping process is restarted with the selection of a new set of timestamp servers.
   - Execute this step n-1 times to complete the chain of timestamps.
4. Finalization of the distributed time stamping:
   - Verification of the data and timestamps obtained.
   - Optionally, calculation of the average time based on the times indicated by the servers and/or storage of the data (timestamps) collected during the process in the system database.

Upon completing the distributed time stamping, the timestamps obtained from the servers are stored in the system database for future retrieval. As previously indicated, the distributed timestamp can be identified either by the last timestamp in the chain of timestamps that has been linked or by calculating the hash of the set of involved timestamps, with the first option being preferred as it is the most efficient.

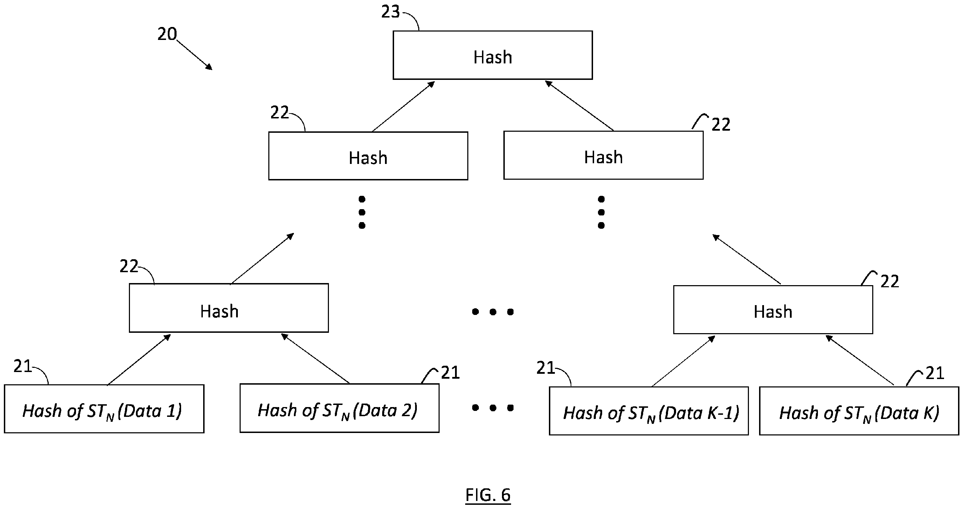

In order to achieve a higher degree of efficiency of the certification method 100, in particular for massive data certifications in which numerous simultaneous or successive certification requests are made (where each certification request involves a first input digital data 4 to be certified, or a hash value 5 thereof), the certification device 2 is preferably configured to generate a first Merkle tree 20 (depicted in **Figure 6**) using as input values (leaves 21 of the tree) a hash of the last time stamping 10 (ST_{N}) of the distributed time stamping process of a plurality K of received certification requests, and to obtain the certificate 9 from the hash of the root node 23 of the first Merkle tree 20.

This cryptographic mechanism, known as a Merkle Tree (as described in patent document US4309569-A), is applied together with the distributed timestamps (specifically, the last timestamp ST_{N}) from different input digital data generated close in time. It has an effect similar to a 'compression' of the distributed timestamps. This is because it provides a representative value of the data to which it is applied, and although it does not allow the original information to be recovered as a compression mechanism does, it provides proof of membership of the data, demonstrating that they are contained in the tree represented by the achieved value.

The construction of the tree and the generation of the nodes 22 up to the root node 23 is done by applying the SHA-256 hash function, but any hash algorithm compatible with the requirements of the Merkle tree can be used.

The result of this compression of the timestamps 10 is the value (hash) of the root node 23 and the proof of membership. The former is the representative value of the set of data contained in the tree structure. The proofs of membership, which are unique for each leaf of the tree, allow unequivocal demonstration that a piece of data is included in the Merkle tree represented by the value of the corresponding root node 23. Thanks to this property of membership, any marking on the root node of the tree 23 means that all the data contained in the tree it represents are being marked simultaneously.

The data from the first generated Merkle tree 20, the value of the root node 23, and the proof of membership of each distributed timestamp are optionally stored in the database 3 of the system for later retrieval. The certification method 100 may therefore comprise generating a first Merkle tree 20 using as input values a hash 25 of the last timestamp 10 (ST_{N}) of the distributed timestamp 16 of the hash value 5 from a plurality K of input digital data (i.e., a plurality of certification requests received simultaneously or successively) that include the first input digital data 4, and obtaining the certificate 9 from the hash of the root node 23 of the first Merkle tree 20. Optionally, the Merkle tree is stored in the database 3.

In the embodiment shown in Figure 1D, the generated distributed timestamp 16 can be processed in a new time stamping action, specifically obtaining a qualified timestamp 15, in order to increase the security and trust of the time stamping of the data to be certified.

The generated distributed timestamp 16, despite having its trust level reinforced due to the difficulty of falsifying the entire set of chained timestamps 10 it comprises, does not provide an absolute guarantee of its probative value (of the integrity of the data from the marked moment) in the judicial domain. This is because the servers performing the timestamps (timestamp servers 8) are typically not part of the group of qualified trust service providers, and therefore, from a judicial perspective, there is the possibility of intentional falsification of the timestamps by the servers.

The solution to eliminate the possibility of subsequent falsification of the timestamps contained in the distributed seal involves time stamping their data through a qualified trust service provider. In the European context, for example, this entity is recognized and known as a QTSA [3], a qualified time stamping authority 12, a server that generates evidence with recognized and legal probative value. Thus, the times indicated by the servers in the distributed timestamp gain a presumption of accuracy from a judicial perspective because now it would require the falsification of the timestamp of the qualified trust service provider that has certified these timestamps.

In one embodiment, the process of obtaining the qualified timestamp 15 comprises two steps:
1. Determination of the data to be sealed: as explained above, in order to optimise the overall efficiency of the certification method, a cryptographic operation of compression of the identifying/summary values of the distributed timestamps close in time is performed. The resulting value representing all these compressed values, hash of the root node 23 of the first Merkle tree 20, is used as data to be sealed by the trusted sealing service.
2. Obtaining qualified time stamping 15:
   a) The value of the root node 23 is adapted to the protocol data format required by the trusted server.
   b) A sealing request message is constructed according to the provider's protocol. For example, the data is included within the Messagelmprint structure of the message by constraining its length to a fixed value using a hash function [2].
   c) The time stamping performed by the qualified trusted service provider (qualified time stamping authority 12) is received and validated.
   d) Optionally, the qualified timestamp 15 is stored in the system database 3 for later retrieval.

Upon completion of the qualified time stamping 15, it is stored in the database 3 of the certification system 1. This timestamp can be uniquely identified by means of the signature value performed by the executing time stamping protocol. In the European case with QTSA, the identifying value of the timestamp is the value of the "SignatureValue" field (specified in RFC 5652 Cryptographic Message Syntax (CMS)) of the timestamp data.

Once again, to maintain optimization in the certification method 100, a set of qualified timestamps 15 can be processed simultaneously by compressing them into a second Merkle tree. For its construction, in this operation, the signatures of the qualified timestamps 15 corresponding to different input digital data are used as leaves of the tree, which is also preferably built using the SHA-256 hash algorithm. Similar to the stage of compressing the distributed timestamps, the root of the tree and the respective proofs of membership obtained can be stored in the system's database 3.

To increase the longevity or validity period of cryptographic operations and the data obtained up to this stage, the system can leverage the properties of blockchain technology 13 (Blockchain), as illustrated in Figure 1E. The result of the calculation from the previous step, that is, the generation of the second Merkle tree integrating a plurality of qualified timestamps 15 made by a QTSA, is the root node hash 23 of the second Merkle tree. This hash is what is ultimately stored in the blockchain 13, for example, either in a Bitcoin transaction or in a Smart Contract if it is stored in a blockchain that uses them.

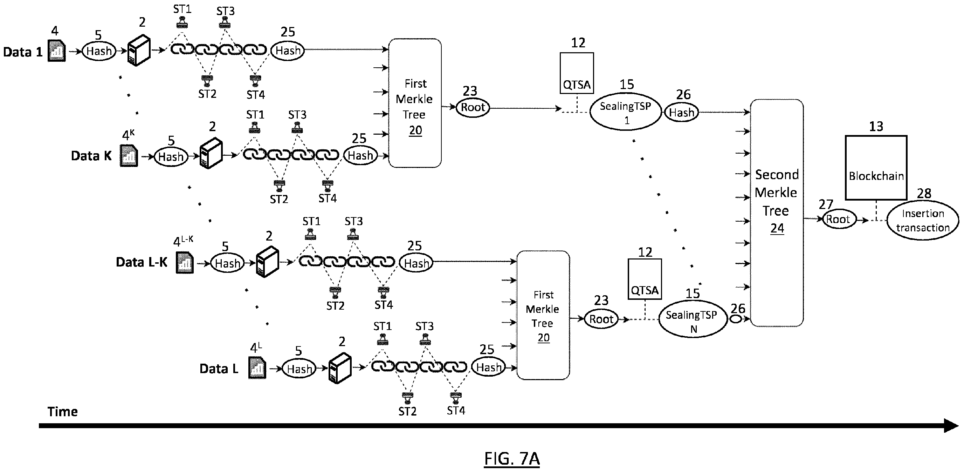

In **Figure 7A****,** an example of the system and process used for the mass certification of data is shown (in the example, L input digital data {4,..., 4^{K},..., 4^{L}}, including the first input digital data 4) using Merkle trees. The process represented in Figure 7A has the following six consecutive phases (executed sequentially), in which the results of the previous phase are used as inputs in the next phase:
1. Get/receive hash value 5 of the L digital input data (Data 1,..., Data K,..., Data L), where K<L.
2. Obtaining the distributed timestamp 16: chained timestamps 10 (ST₁,..., ST_{N}), where N=4 in the example.
3. Elaboration of a first Merkle tree 20 with the identifying values of the distributed timestamps obtained from different hashes of K received data (multiple phases 1 and 2), preferably the hash 25 of the value of the last timestamp 10 (ST_{N}) of the chain of timestamps (ST₁,..., ST_{N}).
4. Obtaining the qualified timestamp 15 applied on the value of the root 23 of the first Merkle tree 20 obtained in the previous phase.
5. Creation of a second Merkle tree 24 with the identifying values (e.g. "SignatureValue") of the qualified time stamps 15 of the input digital L data (in particular, a hash 26 of the signature value).
6. Insertion of the root value 27 of the second Merkle tree 24, obtained in the previous phase, in a blockchain 13 (Blockchain), obtaining the insertion transaction 28.

In the certification of the first input digital data 4, multiple hash functions (5, 25, 26) are used, which can be the same (e.g., SHA-256) or different. The hash functions used in the Merkle trees (20, 24) can also be the same or different.

The mass certification of a large set of input digital data can be achieved by scaling the certification of input digital data through the use of a second Merkle tree 24, overcoming the service limits of providers and reducing the final cost per certified data. Additionally, the trust in the impossibility of falsifying the certification is increased through the distributed timestamp 16, the qualified timestamp 15, and the insertion into the blockchain 13. This way, the benefits of distributed and decentralized certification are combined with centralized qualified certification.

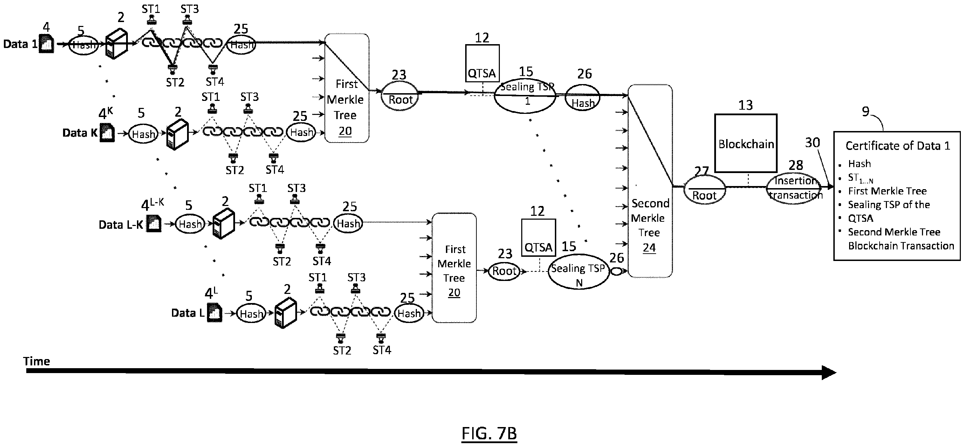

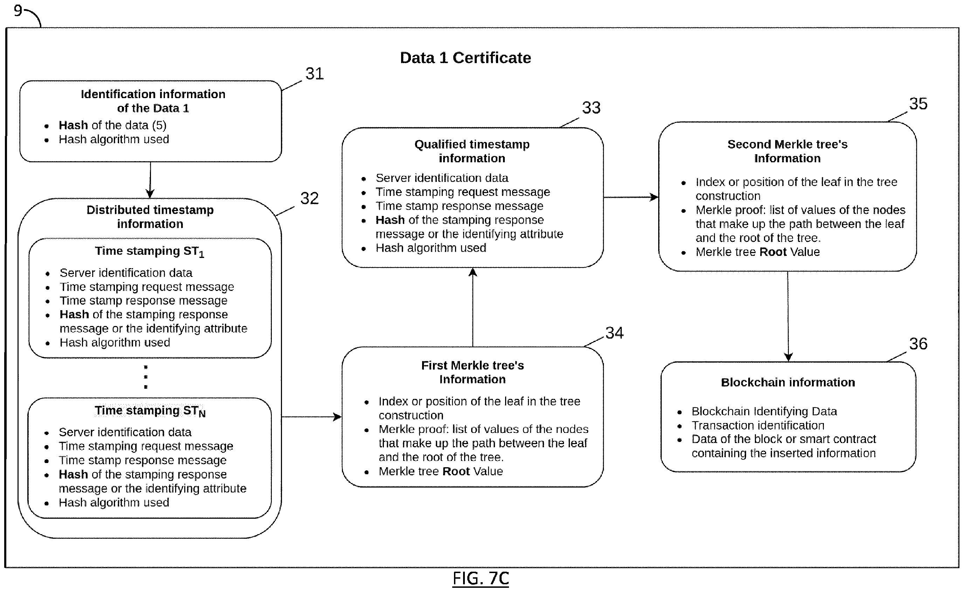

In **Figure 7B****,** the path 30 followed to certify the first input digital data 4 ("Data 1") is represented with a continuous line, which may include the detailed information represented in **Figure 7C****,** in particular:
- a first identification information 31 of the first digital data 4 (hash value 5 and hash algorithm used),
- a second information 32 relating to the distributed timestamp 16 (including information of each timestamp 10 {ST₁,..., ST_{N}}),
- a third piece of information 33 relating to qualified time stamping 15,
- a fourth piece of information 34 relating to the first Merkle tree 20,
- a fifth piece of information 35 relating to the second Merkle tree 24,
- a sixth piece of information 36 relating to blockchain 13.

The advantage of using a blockchain 13 is longevity. Since the certificates used by Time Stamping Authorities (timestamp servers 8 or the qualified timestamp authority 12) to generate the stamps have a determined lifespan (an expiration), storing information in a blockchain 13 provides an extra timestamp that, unlike other timestamps (10, 15), becomes more secure over time. While the passage of time can make other timestamps lose their authenticity if the security of the certificates with which the information was originally signed is compromised, the blockchain timestamp becomes more secure as time goes on. This is because the successive inclusion of blocks on top of the block containing the stamped information makes it increasingly difficult (in terms of computing power) to falsify that information. To achieve such falsification, one would have to recalculate the entire blockchain from the block where the data is inserted.

The result of applying the certification method 100, according to the embodiment in Figure 1E, is a set of information stored in the system's database 3 that constitutes a cryptographic data structure. This data structure allows for a mathematical relationship between certified information and the information deposited in the blockchain 13, passing through the different timestamps and proofs of authorship (digital certificates and asymmetric keys). This data structure represents the certificate provided by the system, which proves the existence of the certified data from the moment of its processing by the system and, therefore, its integrity from that date.

## Claims

1. A digital information certification system, **characterized by** comprising a certification device (2) configured to:
receive a hash value (5) of first input digital data (4);
select a subset (7) and an order (122) of timestamp servers (8) from a set (6) of available timestamp servers (8), where at least one of the subset (7) and the order (122) of timestamp servers (8) is selected randomly;
obtain a distributed timestamp (16) of the hash value (5) by chaining the timestamps (10) from the subset (7) of timestamp servers (8) according to the selected order (122); and
obtain, from the distributed timestamp (16) of the hash value (5), a certificate (9) of the first input digital data (4).

2. The system according to claim 1, further comprising a cryptographic unit (14) configured to:
receive the first input digital data (4), and
apply a hash function to the first input digital data (4) to obtain the hash value (5).

3. A digital information certification system, **characterised in that** it comprises a certification device (2) configured to:
generate a first Merkle tree (20) using as input values a hash (25) of the last timestamp 10 (ST_{N}) of the distributed timestamp (16) of the hash value (5) from a plurality K of input digital data (4, ..., 4^{K}) that include the first input digital data (4); and
obtain the certificate (9) from the hash of the root node (23) of the first Merkle tree (20).

4. The system according to any of the preceding claims, wherein the certification device (2) is configured to obtain the certificate (9) through a qualified timestamp (15) of information related to the distributed timestamp (16).

5. The system according to claims 3 and 4, wherein the certification device (2) is configured to:
generate a second Merkle tree (24) using as input values a hash (26) of a value that identifies the qualified timestamp (15) from a plurality L of input digital data (4, ..., 4^{K}, ..., 4^{L}), with L>K, that include the first input digital data (4); and
obtain the certificate (9) from the hash of the root node (27) of the second Merkle tree (24).

6. The system according to any of the preceding claims, wherein the certification device (2) is configured to obtain the certificate (9) by storing information related to the timestamps (15, 16) in a blockchain (13).

7. The system according to any of the preceding claims, wherein the certification device (2) is configured to randomly select the number N of timestamp servers (S₁, ..., S_{N}) that make up the subset (7) of timestamp servers (8).

8. The system according to any of the preceding claims, comprising a database (3) in which the information contained in the certificate (9) of the first input digital data (4) is stored.

9. A method of certifying digital information, **characterised in that** it comprises:
to receive (110) a hash value (5) of an initial digital input data (4);
selecting (120) a subset (7) and an order (122) of timestamp servers (8) from a set (6) of available timestamp servers (8), where at least one of the subset (7) and the order (122) of timestamp servers (8) is selected randomly;
obtaining (130) a distributed timestamp (16) of the hash value (5) by chaining the timestamps (10) from the subset (7) of timestamp servers (8) according to the selected order; and
to obtain (140), from the distributed timestamp (16) of the hash value (5), a certificate (9) of the first digital input data (4).

10. The method according to claim 9, comprising
receiving (102) the first digital input data (4), and
applying (104) a hash function to the first digital input data (4) to obtain the hash value (5).

11. The method according to any one of claims 9 to 10, comprising:
generating a first Merkle tree (20) using as input values a hash (25) of the last timestamp 10 (ST_{N}) of the distributed timestamp (16) of the hash value (5) from a plurality K of input digital data (4, ..., 4^{K}) that include the first input digital data (4); and
obtain (140) the certificate (9) from the hash of the root node (23) of the first Merkle tree (20).

12. The method according to any of claims 9 to 11, wherein obtaining (140) the certificate (9) comprises obtaining a qualified timestamp (15) of information related to the distributed timestamp (16).

13. The method according to claims 11 and 12, comprising:
generating a second Merkle tree (24) using as input values a hash (26) of a value that identifies the qualified timestamp (15) from a plurality L of input digital data (4, ..., 4^{K}, ..., 4^{L}), with L>K, that include the first input digital data (4); and
obtain the certificate (9) from the hash of the root node (27) of the second Merkle tree (24).

14. The method according to any of claims 9 to 13, wherein obtaining (140) the certificate (9) comprises storing information related to the timestamps (15, 16) in a blockchain (13).

15. A program product comprising program instruction means for carrying out the method defined in any of claims 9 to 14 when the program is executed on a processor.
